# EUROPÄISCHE PATENTSCHRIFT

(11) **EP 1 191 240 B1**
(45) Veröffentlichungstag und Bekanntmachung des Hinweises auf die Patenterteilung: **06.07.2005**
(21) Anmeldenummer: 01810835.7
(22) Anmeldetag: 28.08.2001
(51) Int. Cl.: F16C 5/00

(54) **Kreuzkopf-Gleitschuh**
Crosshead piston shoe
Patin de glissement pour crosse de piston

(30) Priorität: 25.09.2000 EP 00810877
(43) Veröffentlichungstag der Anmeldung: 27.03.2002
(73) Patentinhaber: Wärtsilä Schweiz AG, 8401 Winterthur (CH)
(72) Erfinder: Räss, Konrad, CH 8457 Humlikon (CH)
(74) Vertreter: Sulzer Management AG

(56) Entgegenhaltungen:
- EP-A- 0 393 770
- WO-A-95/08066
- FR-A- 2 452 589
- GB-A- 529 554
- GB-A- 189 406 680
- US-A- 2 427 828
- US-A- 2 682 433
- US-A- 3 944 299

## Beschreibung

Die Erfindung betrifft einen Kreuzkopf-Gleitschuh gemäss Oberbegriff von Anspruch 1 sowie einen Dieselmotor mit einem solchen Gleitschuh.

In einer Hubkolbenmaschine, insbesondere einem Grossdieselmotor, der nach dem Zweitaktverfahren arbeitet und in dem ein Zylinderraum von einem Triebwerksraum getrennt ist, werden Kolbenstangen entlang ihrer Längsachse geradlinig geführt. Die Kraftübertragung von den Kolbenstangen auf Schubstangen eines Triebwerks erfolgt über Kreuzköpfe, die mittels Führungselementen auf geradlinigen Gleitbahnen geführt werden. Bei der Übertragung von Führungkräften, die jeweils zwischen einem Gleitschuh des Kreuzkopfes und einer Stützkonstruktion wirken, treten grosse Flächenpresskräfte auf. Durch geeignete Materialpaarung und Schmierung werden Reibkräfte der Gleitbewegung minimal gehalten und ein Abrieb von Material weitgehend verhindert. Bei bekannten Dieselmotoren besteht der Kreuzkopf-Gleitschuh aus einem Träger aus Stahlguss und einer Lager- oder Gleitflächenschicht, die mittels einer Weissmetall-Beschichtung hergestellt ist, wobei das Gleitflächenmaterial bei der Herstellung der Beschichtung geschmolzen auf den Träger aufgebracht wird. Die Verbindung zwischen dieser Lagerschicht und dem Werkstoff des Trägers hängt von verschiedenen Parametern ab, die beim Beschichten unter Kontrolle gehalten werden müssen. Da dies ziemlich problematisch ist, sind bei Reparaturen hergestellte Gleitflächen gelegentlich mangelhaft. Ausserdem ist eine Beschränkung auf Materialien für die Beschichtung, die sich mittels eines Giessverfahrens auftragen lassen, unvorteilhaft, da für die verwendbaren Materialien relativ grosse Ausmasse für die Gleitflächen vorgesehen werden müssen.

Aufgabe der Erfindung ist es, einen Kreuzkopf-Gleitschuh zu schaffen, für den bei der Wahl des Gleitflächenmaterials eine grössere Vielfalt zur Verfügung steht. Dabei müssen die Verbindungen, die zwischen diesem Material und einem Träger herstellbar sind, den durch die Führungskräfte bewirkten Scherkräften Stand halten. Diese Aufgabe wird durch den im Anspruch 1 definierten Gleitschuh gelöst.

Der Kreuzkopf-Gleitschuh dient zur Führung einer Kolbenstange, insbesondere einer Kolbenstange in einem Zweitakt-Dieselmotor. Dabei ist ein Kreuzkopf - auf dem Gleitschuh gelagert - entlang einer Gleitbahn bewegbar. Ein Material für die Lagerung des Gleitschuhs ist als Lagerplatte ausgebildet. Diese ist als vorgefertigtes Bauteil auf einem als Träger dienenden Teil des Gleitschuhs befestigt. Die Verbindung zwischen Bauteil und Träger ist zumindest teilweise mithilfe eines Formschlusses hergestellt.

Die abhängigen Ansprüche 2 bis 8 betreffen vorteilhafte Ausführungsformen des erfindungsgemässen Kreuzkopf-Gleitschuhs. Anspruch 9 bezieht sich auf einen Dieselmotor mit einem solchen Gleitschuh.

Nachfolgend wird die Erfindung anhand der Zeichnungen erläutert. Es zeigen:
- Fig. 1: eine schematische und ausschnittsweise Darstellung eines Dieselmotors,
- Fig. 2: eine perspektivische Ansicht eines Kreuzkopfes mit vier Gleitschuhen und
- Fig. 3: ausschnittsweise einen Längsschnitt durch den erfindungsgemässen Gleitschuh.

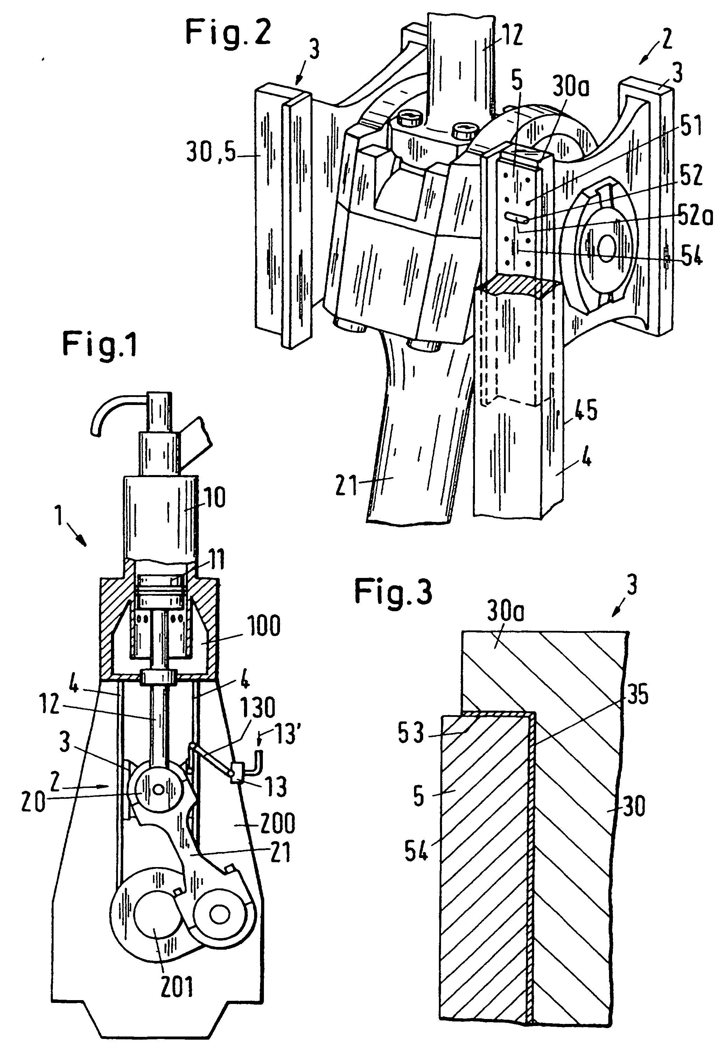

In Fig. 1 ist ein Dieselmotor 1 schematisch als ausschnittsweiser Querschnitt dargestellt. Der Dieselmotor 1 arbeitet nach dem Zweitaktverfahren mit Längsspülung. Er umfasst mehrere Zylinder 10 in einem Zylinderraum 100, der von einem Triebwerksraum 200 getrennt ist. Von einem im Zylinder 10 auf und ab bewegten Kolben 11 erfolgt eine Kraftübertragung, die über eine Kolbenstange 12, einen Kreuzkopfzapfen 20 eines Kreuzkopfes 2, eine Schubstange 21 sowie eine Kurbel und schliesslich auf eine Kurbelwelle 201 des Triebwerks geleitet wird. Der Kreuzkopf 2 wird mittels Führungselementen auf einer geradlinigen Gleitbahn geführt, nämlich mittels Gleitschuhen 3 und Schienen 4. Über eine Öleintrittsstelle 13 und ein gelenkig ausgebildetes Zufuhrrohr 130 wird Öl 13' zur Schmierung der Gleitschuhe 3 und Kühlung des Kolbens 11 in den Kreuzkopf eingespeist.

Der Kreuzkopf 2 ist detaillierter in Fig. 2 abgebildet. Vier Kreuzkopf-Gleitschuhe 3 führen den Kreuzkopf 2 und damit die Kolbenstange 12 geradlinig auf Gleitbahnen 45 der Schienen 4 bzw. auf einer Bahn parallel zur Richtung der Schienen 4. Erfindungsgemäss ist ein Material für die Lagerung des Gleitschuhs 3 als Lagerplatte 5 ausgebildet. Diese Lagerplatte 5 ist als vorgefertigtes, monolithisches Bauteil auf einem als Träger 30 dienenden Teil des Gleitschuhs 3 montiert. Die Lagerplatte 5 und der Träger 30 sind in ihren Kontaktbereichen komplementär zueinander ausgebildet, so dass eine Verbindung zwischen diesen Bauteilen 30 und 5 mithilfe eines Formschlusses hergestellt ist. Insbesondere ist der Formschluss mittels einer seitlich offenen Kammer des Trägers und der in die Kammer eingelegten Lagerplatte 5 hergestellt. Die Kammer weist eine längliche Grundfläche auf, die sich zwischen zwei Enden in Richtung der Gleitbahn 45 erstreckt. An den beiden Enden ist je eine rippenartige Kammerwand 30a angeordnet; es ist nur die obere Kammerwand 30a dargestellt. In diese Kammer ist die quaderförmige Lagerplatte 5 eingelegt, welche die Kammerwände 30a etwas überragt. Der Formschluss kann auch durch eine andere komplementäre oder eine teilweise komplementäre Profilierung hergestellt werden.

Die Lagerplatte 5 kann als Gusskörper aus einem Material hergestellt werden, dessen Schmelzpunkt höher als jener des Trägermaterials ist. Durch eine Nachbearbeitung, beispielsweise durch Schleifen und/oder Beschichten, kann das Reibverhalten der Gleitfläche günstig verändert werden.

Die Lagerplatte 5 enthält für eine Schmierung der Gleitoberfläche 54 Verteilnuten 52 und Zuführkanäle 52a für das Schmieröl 13'.

Wie in Fig. 3 gezeigt ist, kann zwischen Träger 30 und Lagerplatte 5 auf den Kontaktflächen 35 bzw. 53, über die der Formschluss hergestellt ist, ein festes Medium aufgebracht sein, das eine zumindest teilweise dichte Verbindung herstellt. Dieses Medium kann aus einem Klebstoff oder einer Lotlegierung bestehen. Ein solches Medium kann Mikrobewegungen verhindern und auch gegen ein Eindringen von Schmieröl 13' abdichten.

Zwischen Träger 30 und Lagerplatte 5 kann zusätzlich eine Verbindung durch Befestigungselemente hergestellt sein, welche im Träger 30 sowie in der Lagerplatte 5 verankert sind. Diese Befestigungselemente sind insbesondere Schrauben 51, mit denen die Lagerplatte 5 auf den Träger 30 aufspannbar ist. Solche Befestigungselemente 51 verhindern ein Abheben des Trägers 30 von der Lagerplatte 5.

Die Lagerplatte 5 ist mit Vorteil monolithisch ausgebildet, d.h. sie besteht homogen aus einem Werkstoff. Sie kann aber auch heterogen aus mehreren Werkstoffen bestehen, beispielsweise in Form eines Schichtenverbunds. Es ist auch möglich, dass sie mehrteilig aus nebeneinander angeordneten Segmenten zusamengesetzt ist, wobei diese Segmente wiederum homogen oder heterogen ausgebildet sein können.

Das Material, das die Lagerplatte 5 an der für die Lagerung vorgesehenen Gleitoberfläche 54 aufweist, ist beispielsweise Bleibronce. Auch andere Werkstoffe sind geeignet, wenn mit ihnen Führungskräfte zwischen der Gleitbahn 45 und der Gleitoberfläche 54 bei geringen Reibkräften und geringem Verschleiss übertragbar sind.

Es besteht eine grosse Auswahl an möglichen Lagermaterialien: Buntmetalle, Aluminium, Weissmetall, Grauguss und Kombinationen der genannten Metalle, beispielsweise in Form eines mit Aluminium platierten Graugussrückens; ausserdem auch keramische Materialien und/oder Kunststoffe.

Verglichen mit der bekannten Weissmetallbeschichtung der Gleitschuhe 3 kann die Lagerplatte 5 des erfindungsgemässen Gleitschuhs widerstandsfähiger ausgebildet sein. Es sind auch Beschichtungen möglich, deren Verbindung mit einem Substrat der Lagerplatte 30 weniger problematisch ist als für das Weissmetall. Dank einer verbesserten Widerstandsfähigkeit können durch die Lagerplatte 5 höhere Flächenpresskräfte aufgenommen werden; und somit können die erfindungsgemässen Gleitschuhe kleiner ausgebildet sein. Mit kleineren Gleitschuhen kann auch der Triebwerksraum 200 kleiner ausgebildet werden.

Dieselmotoren mit kreuzkopfgeführten Kolbenstangen 12 und Kreuzkopf-Gleitschuhen 3 gemäss der Erfindung können für mobile oder stationäre Zwecke verwendet werden, insbesondere für Schiffsantriebe bzw. Kraftwerksanlagen.

## Patentansprüche

1. Kreuzkopf-Gleitschuh (3) zur Führung einer Kolbenstange (12), insbesondere einer Kolbenstange in einem Zweitakt-Dieselmotor (1), wobei ein Kreuzkopf (2) - auf dem Gleitschuh gelagert - entlang einer Gleitbahn (45) bewegbar ist,
**dadurch gekennzeichnet, dass** ein Material für die Lagerung des Gleitschuhs (3) als Lagerplatte (5) ausgebildet ist, die als vorgefertigtes Bauteil auf einem als Träger dienenden Teil (30) des Gleitschuhs unbeweglich befestigt ist, wobei die Verbindung zwischen Bauteil (5) und Träger (30) zumindest teilweise mithilfe eines Formschlusses hergestellt ist.

2. Gleitschuh nach Anspruch 1, **dadurch gekennzeichnet, dass** der Formschluss mittels einer seitlich offenen Kammer des Trägers (30) und der in die Kammer eingelegten Lagerplatte (5) hergestellt ist.

3. Gleitschuh nach Anspruch 2, **dadurch gekennzeichnet, dass** die Kammer des Trägers (30) eine längliche Grundfläche aufweist, die sich zwischen zwei Enden in Richtung der Gleitbahn (45) erstreckt, und dass an den beiden Enden je eine rippenartige Kammerwand (30a) angeordnet ist.

4. Gleitschuh nach einem der Ansprüche 1 bis 3, **dadurch gekennzeichnet, dass** zwischen Träger (30) und Lagerplatte (5) auf den Kontaktflächen (35, 53), über die der Formschluss hergestellt ist, ein festes Medium (530) aufgebracht ist, wobei insbesondere das Medium eine dichte Verbindung herstellt und aus einem Klebstoff oder einem Lot besteht

5. Gleitschuh nach einem der Ansprüche 1 bis 4, **dadurch gekennzeichnet, dass** zwischen Träger (30) und Lagerplatte (5) zusätzlich eine Verbindung durch Befestigungselemente (51) hergestellt ist, die im Träger sowie in der Lagerplatte verankert sind, und dass diese Befestigungselemente insbesondere Schrauben sind, mit denen die Lagerplatte auf den Träger spannbar ist.

6. Gleitschuh nach einem der Ansprüche 1 bis 5, **dadurch gekennzeichnet, dass** die Lagerplatte (5) für eine Schmierung der Gleitoberfläche (54) Verteilnuten (52) und Zuführkanäle (52a) für ein Schmieröl (13') enthält

7. Gleitschuh nach einem der Ansprüche 1 bis 6, **dadurch gekennzeichnet, dass** die Lagerplatte (5) homogen aus einem Werkstoff besteht, heterogen aus mehreren Werkstoffen besteht und/oder mehrteilig aus nebeneinander angeordneten Segmenten zusamengesetzt ist.

8. Gleitschuh nach einem der Ansprüche 1 bis 6, **dadurch gekennzeichnet, dass** das Material, das die Lagerplatte (5) an der für die Lagerung vorgesehenen Gleitoberfläche (54) aufweist, Bleibronce ist oder ein anderer geeigneter Werkstoff, mit dem Führungskräfte von der Gleitbahn (45) auf den Kreuzkopf (2) bei geringen Reibkräften und geringem Verschleiss übertragbar sind.

9. Dieselmotor (1) für mobile oder stationäre Verwendungszwecke, insbesondere für einen Schiffsantrieb bzw. eine Kraftwerksanlage, mit kreuzkopfgeführten Kolbenstangen (12) und Kreuzkopf-Gleitschuhen (3) gemäss einem der Ansprüche 1 bis 8.

## Claims

1. Cross-head sliding shoe (3) for guiding a piston rod (12), in particular a piston rod in a two stroke diesel engine (1), with a cross head (2) - supported on the sliding shoe - being movable along a slide track (45),
**characterized in that** a material for the bearing of the sliding shoe (3) is formed as a bearing plate (5) which is immovably secured as a prefabricated component on a part (30) of the sliding shoe which serves as carrier, with the connection between the component (5) and the carrier (30) being produced at least partly with the help of a positive fit.

2. Sliding shoe in accordance with claim 1, **characterized in that** the positive fit is produced by means of a laterally open chamber of the carrier (30) and the bearing plate (5) which is laid into the chamber.

3. Sliding shoe in accordance with claim 2, **characterized in that** the chamber of the carrier (30) has an elongate base surface which extends between two ends in the direction of the slide track (45); and **in that** a respective rib-like chamber wall (30a) is arranged at each of the two ends.

4. Sliding shoe in accordance with any one of the claims 1 to 3, **characterized in that** a solid medium (530) is applied between the carrier (30) and the bearing plate (5) on the contact surfaces (35, 53) via which the positive fit is produced, with the medium in particular producing a sealed connection and consisting of an adhesive or of a solder.

5. Sliding shoe in accordance with any one of the claims 1 to 4, **characterized in that** a connection between the carrier (30) and the bearing plate (5) is additionally produced by securing elements (51) which are anchored in the carrier and in the bearing plate; and **in that** these securing elements are in particular screws by means of which the bearing plate can be clamped onto the carrier.

6. Sliding shoe in accordance with any one of the claims 1 to 5, **characterized in that** the bearing plate (5) contains distribution grooves (52) and feed passages (52a) for a lubricating oil (13') for a lubrication of the sliding surface (54).

7. Sliding shoe in accordance with any one of the claims 1 to 6, **characterized in that** the bearing plate (5) consists homogeneously of one material, consists heterogeneously of a plurality of materials and/or is composed in a plurality of pieces of adjacently arranged segments.

8. Sliding shoe in accordance with any one of the claims 1 to 6, **characterized in that** the material which the bearing plate (5) has at the sliding surface (54) which is provided for the bearing is lead bronze or another suitable material by means of which guiding forces can be transmitted from the slide track (45) to the cross head (2) with low frictional forces and low wear.

9. Diesel engine (1) for mobile or stationary uses, in particular for a ship propulsion engine or a power plant, comprising cross-head guided piston rods (12) and cross-head sliding shoes (3) in accordance with any one of the claims 1 to 8.

## Revendications

1. Patin de glissement pour crosse (3) pour le guidage d'une tige de piston (12), en particulier d'une tige de piston dans un moteur Diesel à deux temps (1) où une crosse (2) - logée sur le patin de glissement - est déplaçable le long d'une glissière (45),
**caractérisé en ce qu'**un matériau pour le logement du patin de glissement (3) est réalisé comme plaque de palier (5) qui, comme composant préfabriqué, est fixée d'une manière immobile sur une partie (30) du patin de glissement servant de support, où l'assemblage entre le composant (5) et le support (30) est réalisé au moins partiellement à l'aide d'une concordance des formes.

2. Patin de glissement selon la revendication 1, **caractérisé en ce que** la concordance des formes est réalisée au moyen d'une chambre, ouverte sur le côté, du support (30) et de la plaque de palier (5) placée dans la chambre.

3. Patin de glissement selon la revendication 2, **caractérisé en ce que** la chambre du support (30) présente une face de base oblongue qui s'étend entre deux extrémités en direction de la glissière (45), et que respectivement une paroi de chambre nervurée (30a) est disposée aux deux extrémités.

4. Patin de glissement selon l'une des revendications 1 à 3, **caractérisé en ce que**, entre le support (30) et la plaque de palier (5), un milieu solide (530) est appliqué aux faces de contact (35, 53) par lesquelles la concordance des formes est réalisée, où en particulier le milieu réalise une liaison étanche et est constitué d'une colle ou d'un plomb.

5. Patin de glissement selon l'une des revendications 1 à 4, **caractérisé en ce qu'**une liaison est établie additionnellement entre le support (30) et la plaque de palier (5) par des éléments de fixation (51), qui sont ancrés dans le support et dans la plaque de palier, et **en ce que** ces éléments de fixation sont en particulier des vis par lesquelles la plaque de palier peut être serrée sur le support.

6. Patin de glissement selon l'une des revendications 1 à 5, **caractérisé en ce que** la plaque de palier (5) comporte des rainures de distribution (52) et des canaux d'amenée (52a) pour une huile de lubrification (13') en vue d'une lubrification de la surface de glissement (54).

7. Patin de glissement selon l'une des revendications 1 à 6, **caractérisé en ce que** la plaque de palier (5) est réalisée d'une manière homogène en un matériau, est réalisée d'une manière hétérogène en plusieurs matériaux et/ou est composée, en plusieurs parties, de segments juxtaposés.

8. Patin de glissement selon l'une des revendications 1 à 6, **caractérisé en ce que** le matériau que présente la plaque de palier (5) à la surface de glissement (54) prévue pour le logement, est du bronze au plomb ou un autre matériau approprié, par lequel les forces de guidage peuvent être transmises de la glissière (45) à la crosse (2), avec des forces de frottement réduites et une usure réduite.

9. Moteur Diesel (1) à des fins d'utilisation mobiles ou stationnaires, en particulier pour un entraînement de navire respectivement une usine génératrice, avec des tiges de piston (12) guidées par crosse et des patins de glissement (3) pour crosse selon l'une des revendications 1 à 8.
